(19) Europäisches Patentamt / European Patent Office / Office européen des brevets

(11) **EP 2 010 765 B1**

(12) **FASCICULE DE BREVET EUROPEEN**

(45) Date de publication et mention de la délivrance du brevet:
**05.01.2011 Bulletin 2011/01**

(51) Int Cl.:
*F01N 3/035* *(2006.01)*    *F01N 3/029* *(2006.01)*
*F01N 3/08* *(2006.01)*    *F01N 9/00* *(2006.01)*

(21) Numéro de dépôt: **07731716.2**

(22) Date de dépôt: **09.03.2007**

(86) Numéro de dépôt international:
**PCT/FR2007/050900**

(87) Numéro de publication internationale:
**WO 2007/125228 (08.11.2007 Gazette 2007/45)**

(54) **PROCÉDÉ DE COMMANDE D'UNE INSTALLATION DE TRAITEMENT DES GAZ D'ÉCHAPPEMENT D'UN MOTEUR À COMBUSTION INTERNE**

VERFAHREN ZUR STEUERUNG EINER EINRICHTUNG ZUR BEHANDLUNG VON ABGASEN AUS EINER BRENNKRAFTMASCHINE

METHOD FOR CONTROLLING A FACILITY FOR TREATING EXHAUST GASES FROM AN INTERNAL COMBUSTION ENGINE

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **25.04.2006 FR 0603632**

(43) Date de publication de la demande:
**07.01.2009 Bulletin 2009/02**

(73) Titulaire: **RENAULT S.A.S.**
**92109 Boulogne Billancourt (FR)**

(72) Inventeurs:
• **FRESNET, François**
**92000 Nanterre (FR)**
• **BOUET, Nathalie**
**75014 Paris (FR)**

(56) Documents cités:
**EP-A- 1 607 133**    **EP-A2- 1 211 394**
**FR-A- 2 849 468**    **US-A1- 2005 103 001**
**US-A1- 2005 274 104**

• **JONES M R ET AL: "EXHAUST-GAS REFPORMING OF HYDROCARBON FUELS" SAE TECHNICAL PAPER SERIES, SOCIETY OF AUTOMOTIVE ENGINEERS, WARRENDALE, PA, US, 1993, pages 223-234, XP008010384 ISSN: 0148-7191**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**EP 2 010 765 B1**

## Description

L'invention concerne un procédé de commande d'une installation de traitement des gaz d'échappement d'un moteur à combustion interne, en particulier d'un moteur de véhicule automobile.

L'hétérogénéité des processus de combustion dans les moteurs à mélange pauvre, en particulier dans les moteurs Diesel, a pour effet de générer des particules de carbone, qui ne peuvent être brûlées efficacement dans le moteur. Cela se traduit par exemple par l'apparition, en sortie de la ligne d'échappement, de fumées noires. Ce phénomène est une source de pollution que l'on cherche à réduire.

La présence d'un filtre à particules dans la ligne d'échappement du moteur permet de diminuer considérablement la quantité de particules, poussières et autres suies, émises dans l'atmosphère,
et de satisfaire aux normes antipollution.

Des procédures de régénération permettent de brûler périodiquement les particules piégées dans le filtre et d'éviter le colmatage de ce dernier. Les particules de suies sont des éléments essentiellement carbonés, et leur combustion consomme de l'oxygène pour former du gaz carbonique.

On provoque la combustion des suies dans le filtre à particules en élevant la température des gaz d'échappement au sein du filtre à particules jusqu'à une température de l'ordre de 550 à 650 °C, température à partir de laquelle la combustion des particules de carbone retenues dans le filtre est amorcées.

Le contrôle de la régénération du filtre est effectué par un calculateur qui détermine si la régénération doit avoir lieu et, quand elle est en cours, si elle peut continuer.

Pour déclencher et maintenir la régénération, on utilise fréquemment un procédé qui consiste à modifier les conditions de fonctionnement du moteur pour augmenter la température des gaz d'échappement avant leur passage dans le filtre à particules. Ces modifications concernent souvent l'injection de carburant, qui peut être retardée pour au moins une chambre de combustion du moteur. Dans certains cas également, on réalise une post-injection de carburant, lors de la phase finale du temps de détente. Cette dernière injection n'apporte aucune puissance mécanique supplémentaire au moteur, mais augmente la température des gaz d'échappement.

Ces méthodes ont l'inconvénient d'être très intrusives pour le fonctionnement du moteur et d'augmenter de manière significative la consommation de carburant. De plus, elles augmentent la concentration en carburant dans l'huile de lubrification, par le phénomène qu'on appelle la dilution.

Les installations de traitement des gaz d'échappement comportent aussi quelquefois des pièges à oxydes d'azote (NOx) qui captent les oxydes d'azote générés lors de la combustion. Lors d'une opération de désorption en conditions réductrices, les oxydes d'azote sont réduits en azote et libérés.

Par ailleurs par le document US2005/0103001-A1 propose une installation de traitement des gaz d'échappement d'un moteur à combustion interne comportant un premier catalyseur d'oxydation, suivi par un piège à oxyde d'azote et un filtre à particules, dans le sens de circulation des gaz d'échappement. L'installation comporte en outre un reformeur permettant de générer du reformat à partir du carburant du véhicule. Le reformat est injecté sur commande en amont de l'un des éléments cités précédemment. Le reformat est riche en hydrogène (H2) et en monoxyde de carbone (CO). Lorsqu'il est injecté en amont du catalyseur à oxydation, le reformat s'oxyde avec l'oxygène contenu dans les gaz d'échappement en générant de la chaleur. Cette chaleur est utilisée pour l'élévation de température des gaz d'échappement en amont du filtre à particules et provoquer la régénération de ce dernier. Lorsqu'il est injecté en amont du piège à oxyde d'azote, le reformat est également oxydé par l'oxygène des gaz d'échappement, comme sur un catalyseur d'oxydation. En effet, le piège à oxydes d'azote comporte, comme le catalyseur d'oxydation, des métaux capables d'oxyder l'hydrogène, le monoxyde de carbone en présence d'oxygène.

Si la quantité de reformat injecté est insuffisante, la température atteinte en amont du filtre à particules sera insuffisante pour amorcer et maintenir la régénération. Si au contraire elle est excessive, la température de l'installation risque de monter à un niveau destructeur pour l'installation.

Le document EP 1 607 133 A1 montre un système de traitement des gaz d'échappement dans lequel du gaz contenant de l'hydrogène est injecté en amont d'un catalyseur d'oxydation et d'un filtre à particules, afin d'obtenir une réduction des oxydes d'azotes.

Le document FR 2 849 468 A1 montre un système de traitement des gaz d'échappement dans lequel un reformat est stocké pour être injecté au niveau d'un pot catalytique afin d'amorcer celui-ci par une élévation dé température.

C'est donc un objectif de l'invention de proposer un procédé de commande permettant de garantir le contrôle de la régénération du filtre à particules sans risquer de détériorer l'installation.

Avec cet objectif en vue, l'invention s'applique à une installation de traitement des gaz d'échappement d'un moteur à combustion interne, l'installation comportant des moyens catalytiques d'oxydation, un filtre à particules placé en aval des moyens catalytiques d'oxydation, des moyens de mesure d'une température $T_{m/s}$ des gaz en amont du filtre à particules, et un reformeur pour produire du reformat. L'invention a pour objet un procédé de commande selon lequel on introduit le reformat avec les gaz d'échappement en amont des moyens catalytiques d'oxydation pour obtenir une température de consigne $T_{cons}$ prédéterminée des gaz réchauffés en amont du filtre à particules, de manière à régénérer le filtre à particules par élévation de la température des gaz, on détermine un débit calculé de reformat en fonction de la température de consigne $T_{cons}$, on détermine un coefficient d'écart en fonction de la différence entre la température de consigne $T_{cons}$ et la température mesurée $T_{mes}$ en amont du filtre à particules, et on commande le reformeur avec un débit de consigne de reformat fonction du coefficient d'écart et du débit calculé de reformant.

A l'aide d'un modèle de l'oxydation du reformat, on est capable de prédire une température

en amont du filtre à particules en fonction d'un débit de reformat et de gaz d'échappement. On est ainsi en mesure de déterminer immédiatement le débit calculé de reformat, dès la mise en route du cycle de régénération du filtre à particules. De plus, en ajoutant un asservissement en boucle fermée, et en appliquant le débit de consigne, corrigé en fonction du coefficient d'écart, on prend en compte les différences entre le modèle et la dynamique réelle de la température en amont du filtre à particules. On corrige aussi les écarts de mesure. Même si le modèle est simplifié et ne prend pas en compte tous les paramètres réels, on est capable d'obtenir une température en amont du filtre à particules proche de la température souhaitée, nécessaire pour obtenir la régénération, et sans atteindre des niveaux qui seraient destructeurs.

Selon l'invention, le débit calculé est déterminé en fonction de la variation d'enthalpie des gaz due à l'apport énergétique de l'oxydation du reformat. Le modèle de la température se base uniquement sur l'apport énergétique du reformat aux gaz d'échappement. Ce modèle est simple à mettre en oeuvre et donne des résultats satisfaisants.

De manière particulière, le débit calculé $Q_{ref\_calc}$ peut être déterminé par la formule :

$$Q_{ref\_calc} = \frac{C_{\acute{e}ch} Q_{\acute{e}ch} \left( T_{cons} - T_{\acute{e}ch} \right)}{\Delta H_{H2} \eta_{H2} + \Delta H_{CO} \eta_{CO} - C_{ref} M_{ref} \left( T_{cons} - T_{ref} \right)}$$

dans laquelle :

$Q_{\acute{e}ch}$ est le débit massique des gaz d'échappement en sortie moteur ;
$T_{\acute{e}ch}$ est la température des gaz d'échappement ;
$C_{\acute{e}ch}$ est la capacité calorifique massique des gaz d'échappement ;
$T_{ref}$ est la température du reformat ;
$C_{ref}$ est la capacité calorifique massique du reformat ;
$\Delta H_{H2}$ est la variation d'enthalpie lors de l'oxydation d'une mole d'hydrogène ;
$\Delta H_{CO}$ est la variation d'enthalpie lors de l'oxydation d'une mole de monoxyde de carbone ;
$T_{cons}$ est la température de consigne en amont du filtre à particules ;
$\eta_{CO}$ est la fraction molaire de monoxyde de carbone dans le reformat ;
$\eta_{H2}$ est la fraction molaire d'hydrogène dans le reformat ;
$M_{ref}$ est la masse molaire du reformat.

A titre d'exemple, le coefficient d'écart est déterminé par la formule :

$$\alpha = \frac{T_{mes} - T_{am}}{T_{cons} - T_{am}}$$

dans laquelle $T_{am}$ est la température du mélange gazeux en amont des moyens catalytiques d'oxydation.

De manière particulière, le débit corrigé est le rapport du débit de consigne sur le coefficient d'écart.

Si la température mesurée est égale à la température de consigne, le coefficient d'écart vaut 1, de telle sorte qu'aucune correction n'est appliquée au débit de consigne. Si la température mesurée est plus faible que la température de consigne, le coefficient d'écart est inférieur à 1, de telle sorte que le débit de consigne est supérieur au débit calculé.

Selon un perfectionnement du procédé, si la température mesurée est très différente de la température de consigne, le débit de consigne est le débit calculé. On limite de cette manière d'éventuelles excursions de la consigne qui pourraient générer des phénomènes oscillatoires ou de fortes amplitudes de variation de température.

Par exemple, on considère que la température mesurée est très différente de la température de consigne si le coefficient d'écart est inférieur à 0,7.

Selon un autre perfectionnement, le débit corrigé est plafonné à une valeur de débit maximal prédéterminé. On évite ainsi de donner au reformeur une consigne de débit qu'il ne pourrait pas suivre.

Selon un mode de réalisation particulier, les moyens catalytiques d'oxydation sont un piège à oxydes d'azote. Le piège à oxydes d'azote contient des métaux faisant fonction de catalyseur aptes à provoquer les réactions souhaitées d'oxydation du reformat. Les échanges énergétiques lors de la désorption au niveau du piège à oxydes d'azote sont négligeables et ne perturbent pas l'application du procédé selon l'invention.

L'invention sera mieux comprise et d'autres particularités et avantages apparaîtront à la lecture de la description qui va suivre, la description faisant référence aux dessins annexés parmi lesquels :

- la figure 1 est un schéma d'une installation mettant en oeuvre le procédé selon l'invention ;

- la figure 2 est un organigramme représentant le procédé selon l'invention.

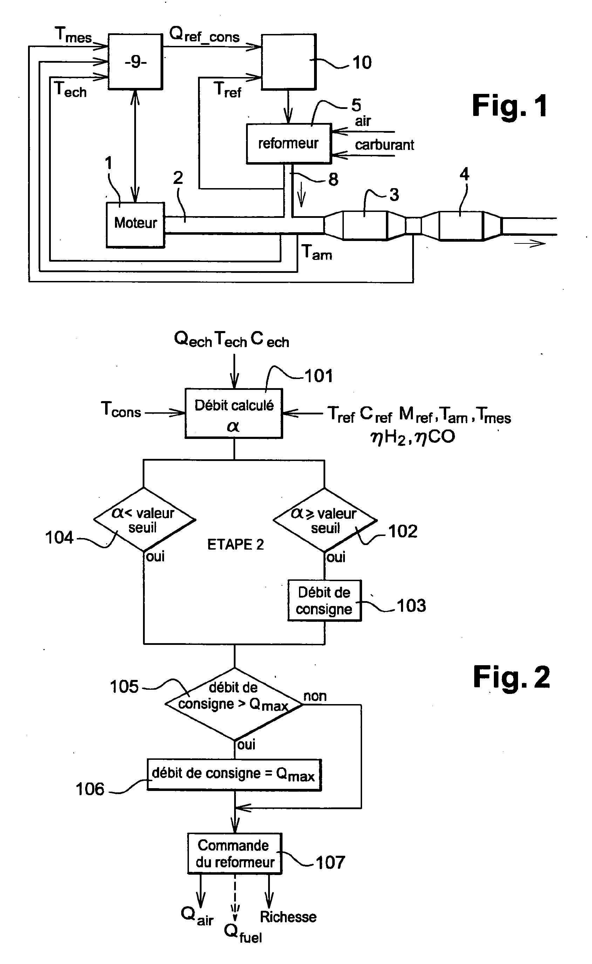

Une installation de traitement des gaz d'échappement d'un moteur de véhicule automobile est montrée sur la figure 1 de manière schématique. L'installation comporte un moteur 1 à combustion interne, un collecteur d'échappement 2 canalisant les gaz d'échappement vers un piège à oxydes d'azote 3, et un filtre à particules 4 recevant les gaz issus du piège à oxydes d'azote 3. L'installation comporte en outre un reformeur 5 produisant du reformat à partir d'air et du carburant du véhicule tel que du gazole. Une conduite de reformat 8 canalise le reformat vers le collecteur d'échappement 2 en amont du piège à oxydes d'azote 3. Le reformeur 5 peut être de tout type connu tel qu'un reformeur par vapeur d'eau, par oxydation partielle ou par reformage auto-thermique.

Le reformeur 5 comporte un calculateur de reformeur 10 qui pilote le reformeur 5 afin qu'il génère le débit souhaité de reformat avec la richesse souhaitée. L'installation comporte également un calculateur de moteur 9 qui pilote le moteur 1, et en particulier l'injection de carburant. Le calculateur de moteur 9 reçoit des informations sur l'état ou le fonctionnement du moteur 1 en provenance de capteurs. Il reçoit en outre des informations de température par des capteurs de température tels que des thermocouples : une température de gaz d'échappement $T_{éch}$, mesurée dans le collecteur d'échappement 2, une température de mélange $T_{am}$ en amont du piège à oxydes d'azote 3 et en aval de l'arrivée de la conduite de reformat 8 dans le collecteur d'échappement 2, et une température des gaz réchauffés $T_{mes}$ en amont du filtre à particules. Par ailleurs, le calculateur de reformeur reçoit une température de reformat $T_{ref}$, mesurée dans la conduite de reformat 8.

Lorsque le moteur 1 fonctionne, il génère des gaz d'échappement qui sont évacués par le collecteur d'échappement 2, puis par le piège à oxydes d'azote 3 et enfin par le filtre à particules 4. Lorsque le calculateur de reformeur 10 détermine qu'il est nécessaire de régénérer le filtre à particules 4, il pilote le reformeur 5 pour que ce dernier génère du reformat à injecter dans les gaz d'échappement. Le reformat passe à travers le piège à oxydes d'azote 3 et subit une oxydation avec l'oxygène contenu dans les gaz d'échappement. L'oxydation est provoquée par la présence de catalyseurs dans le piège à oxydes d'azote 3, d'une manière connue en soi. L'oxydation provoque la libération d'une quantité d'énergie qui sert à élever la température des gaz d'échappement en amont du filtre à particules. Les gaz ainsi réchauffés passent dans le filtre à particules 4 et, du fait de leur température, provoque la régénération du filtre à particules par la combustion des suies piégées dans le filtre. On prédétermine une température de consigne $T_{cons}$ pour les gaz réchauffés qui permet d'obtenir la régénération sans détériorer l'installation.

Le calculateur de moteur 9 transmet au calculateur de reformeur 10 toutes les informations nécessaires à son fonctionnement, en particulier les températures mesurées telles que décrites ci-dessus, et le débit de gaz d'échappement $Q_{éch}$ estimé ou mesuré. Lorsque la régénération du filtre à particules 4 est commandée, le procédé selon la figure 2 est mis en oeuvre pour déterminer le débit de reformat à générer. A l'étape 101, on détermine un débit calculé selon la formule :

$$Q_{ref\_calc} = \frac{C_{éch}Q_{éch}(T_{cons} - T_{éch})}{\Delta H_{H2}\eta_{H2} + \Delta H_{CO}\eta_{CO} - C_{ref}M_{ref}(T_{cons} - T_{ref})}$$

dans laquelle :

$Q_{ref\_calc}$ est le débit calculé de reformat, en kg/s ;
$Q_{éch}$ est le débit massique des gaz d'échappement en sortie moteur, en kg/s ;
$T_{éch}$ est la température des gaz d'échappement, en K ;
$C_{éch}$ est la capacité calorifique massique des gaz d'échappement, en J/kg/K ;
$T_{ref}$ est la température du reformat, en K ;
$C_{ref}$ est la capacité calorifique massique du reformat, en J/kg/K ;
$\Delta H_{H2}$ est la variation d'enthalpie lors de l'oxydation d'une mole d'hydrogène, en J/mole ;

$\Delta H_{CO}$ est la variation d'enthalpie lors de l'oxydation d'une mole de monoxyde de carbone, en J/mole ;

$T_{cons}$ est la température de consigne en amont du filtre à particules, en K ;

$\eta_{CO}$ est la fraction molaire de monoxyde de carbone dans le reformat ;

$\eta_{H2}$ est la fraction molaire d'hydrogène dans le reformat,

$M_{ref}$ est la masse molaire du reformat, en kg/mol.

Ces trois dernières variables $\eta_{CO}$, $\eta_{H2}$, $M_{ref}$ peuvent être déterminées par le calculateur de reformeur 10 par l'intermédiaire de cartographies stockées et prenant en entrée le point de fonctionnement du reformeur 5 tel que défini par la richesse du mélange air/carburant à reformer et le débit de reformat. Il en est de même pour les capacités calorifiques $C_{éch}$, $C_{ref}$ des gaz d'échappement et du reformat.

On calcule également le coefficient d'écart :

$$\alpha = \frac{T_{mes} - T_{am}}{T_{cons} - T_{am}} \ .$$

Ensuite, on détermine à l'étape 102 si le coefficient d'écart est supérieur à une valeur de seuil prédéterminé, par exemple 0,7. Dans ce cas, on détermine à l'étape 103 un débit de consigne selon la formule :

$$Q_{ref\_cons} = \frac{Q_{ref\_calc}}{\alpha}$$

Si, comme déterminé à l'étape 104, le coefficient d'écart est inférieur à la valeur de seuil prédéterminé, on passe directement à l'étape 105. On passe aussi à cette étape après l'étape 103. Lors de l'étape 105, on détermine si le débit de consigne dépasse un débit maximal $Qmax$ prédéterminé en fonction des capacités de l'installation. Si tel est le cas, on remplace à l'étape 106 le débit calculé par le débit maximal $Qmax$, de manière à limiter la valeur de la consigne.

A l'étape 107, le débit de consigne est décliné en une commande de richesse et une commande de débit d'air pour le reformeur 5. Eventuellement, l'une des commandes précédentes peut être combinée à une commande de débit de carburant, selon le type de commande accepté par le reformeur 5.

Ces étapes 101 à 107 sont répétées en cycle tant que la régénération est nécessaire.

L'invention n'est pas limitée au mode de réalisation décrit ci-dessus uniquement à titre d'exemple. Le piège à oxydes d'azote peut être remplacé par d'autres moyens catalytiques d'oxydation du reformat tels qu'un catalyseur d'oxydation. La température de consigne $Tcons$ peut évoluer au cours de la régénération.

**Revendications**

1.   Procédé de commande d'une installation de traitement des gaz d'échappement d'un moteur (1) à combustion interne, l'installation comportant des moyens catalytiques d'oxydation (3), un filtre à particules (4) placé en aval des moyens catalytiques d'oxydation (3), des moyens de mesure d'une température $T_{mes}$ des gaz réchauffés en amont du filtre à particules (4), un reformeur (5) pour produire du reformat, procédé selon lequel on introduit le reformat avec les gaz d'échappement en amont des moyens catalytiques d'oxydation pour obtenir une température de consigne $T_{cons}$ prédéterminée des gaz réchauffés en amont du filtre à particules (4), de manière à régénérer le filtre à particules (4) par élévation de la température des gaz, **caractérisé en ce qu'**on détermine un débit calculé $Q_{ref\_calc}$ de reformat en fonction de la température de consigne $T_{cons}$, on détermine un coefficient d'écart en fonction de la différence entre la température de consigne $T_{cons}$ et la température mesurée $T_{mes}$ en amont du filtre à particules, et on commande le reformeur (5) avec un débit de consigne $Q_{ref\_cons}$ de reformat fonction du coefficient d'écart $\alpha$ et du débit calculé $Q_{ref\_calc}$ de reformat, le débit calculé $Q_{ref\_calc}$ étant déterminé en fonction de la variation d'enthalpie des gaz due à l'apport énergétique de l'oxydation du reformat.

2.   Procédé selon la revendication 1, selon lequel le débit calculé est déterminé par la formule :

$$Q_{ref\_calc} = \frac{C_{éch}Q_{éch}(T_{cons} - T_{éch})}{\Delta H_{H2}\eta_{H2} + \Delta H_{CO}\eta_{CO} - C_{ref}M_{ref}(T_{cons} - T_{ref})}$$

dans laquelle :

$Q_{éch}$ est le débit massique des gaz d'échappement en sortie moteur ;

$T_{éch}$ est la température des gaz d'échappement ;

$C_{éch}$ est la capacité calorifique massique des gaz d'échappement ;

$T_{ref}$ est la température du reformat ;

$C_{ref}$ est la capacité calorifique massique du reformat ;

$\Delta H_{H2}$ est la variation d'enthalpie lors de l'oxydation d'une mole d'hydrogène ;

$\Delta H_{CO}$ est la variation d'enthalpie lors de l'oxydation d'une mole de monoxyde de carbone ;

$T_{cons}$ est la température de consigne en amont du filtre à particules ;

$\eta_{CO}$ est la fraction molaire de monoxyde de carbone dans le reformat ;

$\eta_{H2}$ est la fraction molaire d'hydrogène dans le reformat ;

$M_{ref}$ est la masse molaire du reformat.

3. Procédé selon la revendication 1, selon lequel le coefficient d'écart est déterminé par la formule :

$$\alpha = \frac{T_{mes} - T_{am}}{T_{cons} - T_{am}}$$

dans laquelle $T_{am}$ est la température du mélange gazeux en amont des moyens catalytiques d'oxydation (3).

4. Procédé selon la revendication 3, selon lequel le débit de consigne $Q_{ref\_cons}$ est le rapport du débit calculé $Q_{ref\_calc}$ sur le coefficient d'écart $\alpha$.

5. Procédé selon la revendication 4, selon lequel, si la température mesurée $T_{mes}$ est très différente de la température de consigne $T_{cons}$, le débit de consigne est le débit calculé.

6. Procédé selon la revendication 5, selon lequel on considère que la température mesurée $T_{mes}$ est très différente de la température de consigne $T_{cons}$ si le coefficient d'écart $\alpha$ est inférieur à 0,7.

7. Procédé selon la revendication 1, selon lequel le débit de consigne $Q_{ref\_cons}$ est plafonné à une valeur de débit maximal $Q_{max}$ prédéterminé.

8. Procédé selon la revendication 1, selon lequel les moyens catalytiques d'oxydation sont un piège à oxydes d'azote (3).

**Claims**

1. Method for controlling a facility for treating the exhaust gases from an internal combustion engine (1), the facility comprising catalytic oxidation means (3), a particulate filter (4) positioned downstream of the catalytic oxidation means (3), means of measuring a temperature $T_{mes}$ of the warmed gases upstream of the particulate filter (4), a reformer (5) for producing reformate, in which method the reformate is introduced with the exhaust gases upstream of the catalytic oxidation means in order to obtain a predetermined setpoint temperature $T_{cons}$ for the warmed gases upstream of the particulate filter (4), so as to regenerate the particulate filter (4) by increasing the temperature of the gases, **characterized in that** a calculated reformate flow rate $Q_{ref\_calc}$ is determined as a function of the setpoint temperature $T_{cons}$, a deviation coefficient is determined as a function of the difference between the setpoint temperature $T_{cons}$ and the measured temperature $T_{mes}$ upstream of the particulate filter, and the reformer (5) is controlled using a reformate setpoint flow rate $Q_{ref\_cons}$ dependent on the deviation coefficient $\alpha$ and on the calculated reformate flow rate $Q_{ref\_calc}$, the calculated flow rate $Q_{ref\_calc}$ being determined as a function of the variation in enthalpy of the gases due to the addition of energy resulting from the oxidation of the reformate.

2. Method according to Claim 1, in which the calculated flow rate is determined using the formula:

$$Q_{ref\_calc} = \frac{C_{éch}Q_{éch}(T_{cons} - T_{éch})}{\Delta H_{H2}\eta_{H2} + \Delta H_{CO}\eta_{CO} - C_{ref}M_{ref}(T_{cons} - T_{ref})}$$

in which:

$Q_{éch}$ is the mass flow rate of exhaust gases leaving the engine;
$T_{éch}$ is the temperature of the exhaust gases;
$C_{éch}$ is the mass heat capacity of the exhaust gases;
$T_{ref}$ is the reformate temperature;
$C_{ref}$ is the mass heat capacity of the reformate;
$\Delta H_{H2}$ is the variation in enthalpy when one mole of hydrogen is oxidized;
$\Delta H_{CO}$ is the variation in enthalpy when one mole of carbon monoxide is oxidized;
$T_{cons}$ is the setpoint temperature upstream of the particulate filter;
$\eta_{CO}$ is the molar fraction of carbon monoxide in the reformate;
$\eta_{H2}$ is the molar fraction of hydrogen in the reformate;
$M_{ref}$ is the molar mass of the reformate.

3. Method according to Claim 1, in which the deviation coefficient is determined using the formula:

$$\alpha = \frac{T_{mes} - T_{am}}{T_{cons} - T_{am}}$$

in which $T_{am}$ is the temperature of the gaseous mixture upstream of the catalytic oxidation means (3).

4. Method according to Claim 3, in which the setpoint flow rate $Q_{ref\_cons}$ is the ratio of the calculated flow rate $Q_{ref\_cacl}$ to the deviation coefficient $\alpha$.

5. Method according to Claim 4, in which, if the measured temperature $T_{mes}$ differs very greatly from the setpoint temperature $T_{cons}$, the setpoint flow rate is the calculated flow rate.

6. Method according to Claim 5, in which the measured temperature $T_{mes}$ is considered to be very greatly different from the setpoint temperature $T_{cons}$ if the deviation coefficient $\alpha$ is lower than 0.7.

7. Method according to Claim 1, in which the setpoint flow rate $Q_{ref\_cons}$ is capped at a predetermined maximum flow rate value $Q_{max}$.

8. Method according to Claim 1, in which the catalytic oxidation means are a nitrogen oxides trap (3).

**Patentansprüche**

1. Verfahren zum Steuern einer Anlage zum Behandeln der Abgase einer Brennkraftmaschine (1), wobei die Anlage Oxidationskatalysatormittel (3), einen stromabseitig der Oxidationskatalysatormittel (3) angeordneten Partikelfilter (4), Mittel zum Messen einer Temperatur $T_{mes}$ der erwärmten Gase stromaufseitig des Partikelfilters (4), und einen Reformer (5), um ein Reformat zu erzeugen, enthält, wobei in dem Verfahren das Reformat zusammen mit den Abgasen stromaufseitig der Oxidationskatalysatormittel eingeleitet wird, um einen vorgegebenen Temperatursollwert $T_{cons}$ der erwärmten Gase stromaufseitig des Partikelfilters (4) zu erhalten, derart, dass der Partikelfilter (4) durch Erhöhen der Temperatur regeneriert wird, **dadurch gekennzeichnet, dass** ein berechneter Durchsatz $Q_{ref\_calc}$ des Reformats als Funktion der Solltemperatur $T_{cons}$ bestimmt wird, ein Abstandskoeffizient als Funktion der Differenz zwischen der Solltemperatur $T_{cons}$ und der gemessenen Temperatur $T_{mes}$ stromaufseitig des Partikelfilters bestimmt wird und der Reformer (5) mit einem Solldurchsatz $Q_{ref\_cons}$ des Reformats als Funktion des Abstandskoeffizienten $\alpha$ und des berechneten Durchsatzes $Q_{ref\_calc}$ des Reformats gesteuert wird, wobei der berechnete Durchsatz $Q_{ref\_calc}$ als Funktion der Veränderung der Enthalpie der Gase, die durch den Energieeintrag die Oxidation des Reformats bedingt ist, bestimmt wird.

2. Verfahren nach Anspruch 1, wobei der berechnete Durchsatz durch die folgende Formel bestimmt wird:

$$Q_{ref\_calc} = \frac{C_{\acute{e}ch}Q_{\acute{e}ch}\left(T_{cons} - T_{\acute{e}ch}\right)}{\Delta H_{H2}\eta_{H2} + \Delta H_{CO}\eta_{CO} - C_{ref}M_{ref}\left(T_{cons} - T_{ref}\right)}$$

worin:

$Q_{\acute{e}ch}$ der Massendurchsatz der Abgase am Ausgang des Motors ist;
$T_{\acute{e}ch}$ die Temperatur der Abgase ist;
$C_{\acute{e}ch}$ die Massenwärmekapazität der Abgase ist;
$T_{ref}$ die Temperatur des Reformats ist;
$C_{ref}$ die Massenwärmekapazität des Reformats ist;
$\Delta H_{H2}$ die Veränderung der Enthalpie bei der Oxidation eines Mols Wasserstoff ist;
$\Delta H_{CO}$ die Veränderung der Enthalpie bei der Oxidation eines Mols Kohlenstoffmonoxid ist;
$T_{cons}$ die Solltemperatur stromaufseitig des Partikelfilters ist;
$\eta_{CO}$ der molare Anteil von Kohlenstoffmonoxid im Reformat ist;
$\eta_{H2}$ der molare Anteil von Wasserstoff im Reformat ist;
$M_{ref}$ die molare Masse des Reformats ist.

3. Verfahren nach Anspruch 1, wobei der Abstandskoeffizient durch die folgende Formel bestimmt wird:

$$\alpha = \frac{T_{mes} - T_{am}}{T_{cons} - T_{am}}$$

worin $T_{am}$ die Temperatur des Gasgemisches stromaufseitig der Oxidationskatalysatormittel (3) ist.

4. Verfahren nach Anspruch 3, wobei der Solldurchsatz $Q_{ref\_cons}$ das Verhältnis des berechneten Durchsatzes $Q_{ref\_calc}$ zu dem Abstandkoeffizienten $\alpha$ ist.

5. Verfahren nach Anspruch 4, wobei dann, wenn die gemessene Temperatur $T_{mes}$ von der Solltemperatur $T_{cons}$ stark abweicht, der Solldurchsatz der berechnete Durchsatz ist.

6. Verfahren nach Anspruch 5, wobei davon ausgegangen wird, dass die gemessene Temperatur $T_{mes}$ von der Solltemperatur $T_{cons}$ stark abweicht, wenn der Abstandskoeffizient $\alpha$ kleiner als 0,7 ist.

7. Verfahren nach Anspruch 1, wobei der Solldurchsatz $Q_{ref\_cons}$ durch einen vorgegebenen maximalen Durchsatzwert $Q_{max}$ gedeckt ist.

8. Verfahren nach Anspruch 1, wobei die Oxidationskatalysatormittel einen Stickoxidabscheider (3) sind.

**Fig. 1**

**Fig. 2**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20050103001 A1
- EP 1607133 A1
- FR 2849468 A1